# EUROPÄISCHE PATENTSCHRIFT

(11) **EP 3 786 997 B1**
(45) Veröffentlichungstag und Bekanntmachung des Hinweises auf die Patenterteilung: **26.03.2025**
(21) Anmeldenummer: 20191901.6
(22) Anmeldetag: 20.08.2020
(51) Int. Cl.: H01H 3/28, H01H 71/02, H01H 13/74, H01H 23/14

(54) **FERNANTRIEBS-ANORDNUNG MIT VERRIEGELUNGSMECHANISMUS**
ELECTRICAL REMOTE DRIVE ARRANEGMENT COMPRISING A LOCKING MECHANISM
TÉLÉCOMMANDE ÉLECTRIQUE DESTINÉE COMPRENANT UN MÉCANISME DE VERROUILLAGE

(30) Priorität: 27.08.2019 DE 102019122978
(43) Veröffentlichungstag der Anmeldung: 03.03.2021
(73) Patentinhaber: Bender GmbH & Co. KG, 35305 Grünberg (DE)
(72) Erfinder: BECKER, Matthias, 36325 Feldatal (DE)
(74) Vertreter: advotec.

(56) Entgegenhaltungen:
- WO-A1-2019/073222
- CN-A- 103 745 894
- CN-A- 106 409 545
- CN-U- 205 920 886
- CN-Y- 2 332 064
- US-A- 3 069 518

## Beschreibung

Die Erfindung betrifft eine Fernantriebs-Anordnung gemäß dem Oberbegriff des Anspruchs 1.

Eine sichere und zuverlässige Stromversorgung bildet die Grundvoraussetzung für einen reibungslosen und wirtschaftlichen Betrieb im privaten, im öffentlichen sowie insbesondere in einem industriellen Umfeld. Dabei erfordert die zunehmende Komplexität elektrischer Anlagen angemessene Schutzmaßnahmen, um die Anforderungen an die Ausfallsicherheit und die elektrische Sicherheit zu erfüllen.

Für einen normgerechten Aufbau und zur Überwachung der Stromversorgung ist die elektrische Anlage mit Schalteinrichtungen wie beispielsweise Überstrom-Schutzeinrichtungen, Leistungsschaltern oder Lasttrennschaltern versehen. Im Hinblick auf die Anlagenverfügbarkeit und die elektrische Sicherheit muss die elektrische Anlage auch dann noch steuerbar sein, wenn ein Teil der Stromversorgung, beispielsweise bei dem Ausfall eines Teilnetzes, nicht mehr gewährleistet ist.

Durch den getrennten Aufbau zwischen der Schalteinrichtung einerseits und einem Antrieb für die Schalteinrichtung andererseits kann somit das Umschalten der Schalteinrichtung mittels eines aus der Entfernung betriebenen Antrieb (Fernantrieb) in Verbindung mit einer unabhängigen und entfernt zur Verfügung stehenden Stromquelle durchgeführt werden.

Insbesondere in medizinisch genutzten Bereichen werden in der Norm VDE 0100-710 über die Isolationsüberwachung hinaus weitere Anforderungen an das Stromversorgungssystem, insbesondere auch an die Schalteinrichtungen gestellt. So sind beispielsweise bei einem Spannungsausfall Umschaltzeiten kleiner als 500 ms zu erfüllen.

Aus dem Stand der Technik sind Fernantriebe zur Umschaltsteuerung bekannt, die auf Elektromotoren als Aktuator beruhen, jedoch nicht die normativ geforderten Umschaltzeiten erfüllen. Weiterhin sind Fernantriebe verfügbar, die zwar Elektromagnet-gesteuerte Aktuatoren aufweisen, die aber nur von einer einzigen Steuerspannungsquelle angesteuert werden und somit nicht die erforderliche Ausfallsicherheit gewährleisten. Auch sind darüber hinaus schnell schaltende Fernantriebe bekannt, die mit einem Federspeicher oder Elektromagneten arbeiten; diese weisen jedoch eine sehr komplexe Mechanik auf und sind wegen ihrer Größe ungeeignet für eine Hutschienenmontage.

So zeigt WO 2019/073222 A1 einen fernbedienbaren Schalter, bei dem über eine elektromagnetische Spule eine in Folge der Magnetkraft verschiebbare Magneteinheit auf ein drehbar gelagertes Schaltglied einwirkt, welches über einen Stößel elektrische Kontakte öffnet oder schließt.

In CN 205 920 886 U ist ein per Funk fernbedienbarer Schaltmechanismus beschrieben, der als extern anbringbare Schaltbox einen Kippschalter betätigt.

CN 106 409 545 A zeigt ein elektromagnetisch gesteuertes Antriebsmodul für eine vornehmlich wandmontierten Kippschalter.

In CN 103 745 894 A wird ein fernantreibbarer Wiedereinschaltungsmechanismus für einen elektrischen Schutzschalter beschrieben. Ein verschiebbarer Anker wird von zwei gegenüberliegenden Elektromagneten bewegt, wobei ein Schwenkhebel in eine Führungsnut des Ankers eingreift und über ein Umlenkgestänge einen Hebel betätigt.

US 3,069,518 A zeigt einen Mechanismus zur wechselseitigen Umschaltung zweier benachbarter Schutzschalter mittels eines Schwenkhebels der von zwei Elektromagneten.

CN 2 332 064 Y zeigt einen Schaltmechanismus zum Schalten eines Schutzschalters, wobei zwei Elektromagneten über ihre jeweiligen Anker auf eine Schaltwippe einwirken, die über einen Hebel auf den Schutzschalter einwirkt und einen manuellen Griff bewegt.

Der vorliegenden Erfindung liegt somit die Aufgabe zugrunde, einen elektrischen Fernantrieb für eine an einer Hutschiene montierte Schalteinrichtung zu konstruieren, der kompakt und einfach aufgebaut ist, normgerechte und schnelle Umschaltzeiten aufweist sowie von mindestens zwei unabhängigen Energiequellen gespeist werden kann und in Verbindung mit zwei Schalteinrichtungen eine zuverlässige wechselweise Zuschaltung ermöglicht.

Diese Aufgabe wird gelöst durch eine Fernantriebs-Anordnung gemäß den Merkmalen in Anspruch 1.

In der erfindungsgemäßen Fernantriebs-Anordnung können zwei der Fernantriebe nebeneinander auf einer Hutschiene angeordnet und mit einem Verriegelungsmechanismus versehen werden. Durch die Verriegelung eines der beiden Schlitten bei Bewegung des jeweils anderen Schlittens wird eine gleichzeitige Ingangsetzung beider Fernantriebe verhindert.

Somit ist bei der Verwendung von zwei Fernantrieben und zwei Schalteinrichtungen mit dem erfindungsgemäßen Verriegelungsmechanismus die Forderung erfüllt, dass es zur Realisierung eines Netzumschalters nach der Norm IEC 60947-6-1 nicht möglich sein soll, zwei Stromnetze zusammenzuschalten.

Insbesondere in Verbindung mit zwei Schalteinrichtungen, die beispielsweise eine Umschalteinrichtung zum wechselweisen Zuschalten oder Trennen oder zur vollständigen Trennung von zwei Stromversorgungsnetzen bilden, erweist sich die erfindungsgemäße Fernantriebs-Anordnung als zuverlässige und kompakte Lösung.

In weiterer Ausgestaltung des Verriegelungsmechanismus weist dieser in Verbindung mit dem Fernantrieb des Typs Schlitten ein Verriegelungselement in Form eines rechtwinkligen Winkelprofils auf, welches um eine Verriegelungsdrehachse, die senkrecht zur Ebene der Hutschiene steht, drehbar angeordnet ist. Bei Verschieben eines der Schlitten aus der AUS-Stellung in die EIN-Stellung stößt dabei eine Frontfläche des Schlittens gegen eine der Seitenflächen des Winkelprofils und dreht das Winkelprofil so weit, dass durch Anlegen der anderen Seitenfläche des Winkelprofils gegen eine Frontfläche des anderen Schlittens eine Bewegung dieses anderen Schlittens in die EIN-Stellung blockiert wird.

Durch die Blockierung des jeweils anderen Fernantriebs ist sichergestellt, dass nicht beide Fernantriebe gleichzeitig die jeweils betätigte Schalteinrichtung einschalten.

Der Fernantrieb umfasst ein Trägerelement, welches für eine normgemäße Montage an einer Hutschiene ausgelegt ist. Der Fernantrieb kann somit unmittelbar neben die zu betätigenden Schalteinrichtungen als Zusatzfunktion montiert werden.

Auf dem Trägerelement sind gegenüberliegend zwei als Elektromagnete ausgeführte Aktuatoren angeordnet, die mit ihren jeweiligen stabförmigen Ankern wechselweise auf einen verschiebbar gelagerten Schlitten einwirken. Der Schlitten weist mittig eine Durchführung zur Aufnahme eines ersten Hebelarms eines Kipphebels auf. Der Kipphebel ist um eine Kipphebel-Drehachse schwenkbar, die parallel zu der Längsausdehnung der Hutschiene und zumindest näherungsweise durch einen Drehpunkt eines Schaltknaufs der zu betätigenden Schalteinrichtung verläuft. An einem zweiten Hebelarm des Kipphebels ist parallel zu der Längsausdehnung der Hutschiene eine Mitnehmerschiene angebracht, in die seitlich des zweiten Hebelarms der Schaltknauf der Schalteinrichtung eingreift. Bei einer durch die Aktivierung eines der Elektromagneten bewirkten Verschiebung des Schlittens wird der Kipphebel umgeworfen, wodurch zugleich der Schaltknauf der Schalteinrichtung betätigt wird.

Durch die zwei unabhängig voneinander ansteuerbaren, galvanisch getrennten Aktuatoren ist deren Speisung aus zwei voneinander unabhängigen Stromversorgungsnetzen möglich. Darüber hinaus arbeiten die Elektromagnete sehr schnell und erlauben damit normgemäß kurze Umschaltzeiten. Die Elektromagnete sind bevorzugt als Zugmagnete ausgeführt.

In weiterer vorteilhafter Ausgestaltung ist die Mitnehmerschiene als U-Profil ausgebildet.

Das U-Profil gewährleistet eine hinreichende Stabilität, wobei die Verwindungssteifheit der Mitnehmerschiene eine passgenaue Kraftübertragung auf den Schaltknauf sicherstellt.

Weiterhin ist die Mitnehmerschiene zur Anpassung an die Bewegung des Schaltknaufs radial verstellbar angebracht.

Um ein zuverlässiges Zusammenwirken des Fernantriebs mit unterschiedlichen Schalteinrichtungen zu garantieren, ist die Mitnehmerschiene radial verstellbar angebracht, sodass durch diese mechanische Anpassung eine möglichst spielfreie Mitnahme des Schaltknaufs gewährleistet ist.

Bevorzugt weist die Mitnehmerschiene in ihrer Längsrichtung eine solche Ausdehnung auf, dass die Betätigung mehrerer auf der Hutschiene nebeneinander montierter Schalteinrichtungen möglich ist.

Der Fernantrieb eignet sich damit zur gleichzeitigen Umschaltung mehrerer nebeneinander auf der Hutschiene angeordneter Schalteinrichtungen.

Weiterhin kann das Trägerelement zur Vereinfachung der Hutschienenmontage einen lösbaren Hutschienen-Clip aufweisen. Somit ist eine schnelle Montage an einer normgemäßen Hutschiene beispielsweise in einem 45-mm-Ausschnitt möglich.

Mit Vorteil kann der Verriegelungsmechanismus als eigenständige bauliche Einheit zur Montage an einer Hutschiene ausgeführt sein, wobei diese bauliche Einheit aus einem Rahmenteil zur Montage an einer Hutschiene besteht, an dem das Verriegelungselement mit Verriegelungsdrehachse befestigt ist.

In dieser Ausführung kann der Verriegelungsmechanismus als eigenständige bauliche Einheit in eine bestehende Konfiguration aus Fernantrieben und Umschalteinheiten an einer Hutschiene hinzugefügt werden.

Weitere vorteilhafte Ausgestaltungsmerkmale ergeben sich aus der nachfolgenden Beschreibung und den Zeichnungen, die bevorzugte Ausführungsformen der Erfindung anhand von Beispielen erläutern.

Es zeigen:
**Fig. 1** In schematischer Darstellung eine Ausführungsform des erfindungsgemäßen Fernantriebs (Typ Schlitten);
**Fig. 2a, 2b, 2c** In schematischer Darstellung die Wirkungsweise einer erfindungsgemäßen Fernantriebs-Anordnung mit Verriegelungsmechanismus für den Typ Schlitten.

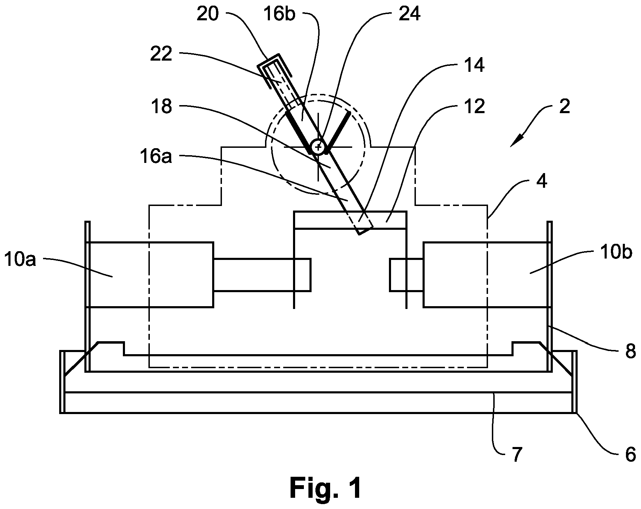

**Fig. 1** zeigt in schematischer Darstellung eine Ausführungsform (Typ Schlitten) des Fernantriebs 2. Auf einem Trägerelement 8, welches an einer Hutschiene 6 befestigt ist - die Befestigung kann über einen Hutschienen-Clip 7 erfolgen - sind gegenüberliegend zwei Aktuatoren 10a, 10b angeordnet, die als Zugmagnete ausgeführt mit ihren stabförmigen Ankern wechselweise auf einen verschiebbar gelagerten Schlitten 12 einwirken.

Der Schlitten 12 weist eine Durchführung 14 auf, durch die ein erster Hebelarm 16a eines Kipphebels 18 geführt wird. Der Kipphebel 18 ist in einer Kipphebel-Drehachse 24 gelagert, die parallel zur Längsausdehnung der Hutschiene 6 ausgerichtet ist und deren Drehpunkt näherungsweise mit dem Drehpunkt eines Schaltknaufs 22 der Schalteinrichtung 4 deckungsgleich ist. An einem zweiten Hebelarm 16b des Kipphebels 18 ist endseitig eine Mitnehmerschiene 20 parallel zur Längsausdehnung der Hutschiene 6 angebracht. In die Mitnehmerschiene 20 greift der Schaltknauf 22 der Schalteinrichtung 4 ein und wird beim Verschwenken des Kipphebels 18 betätigt.

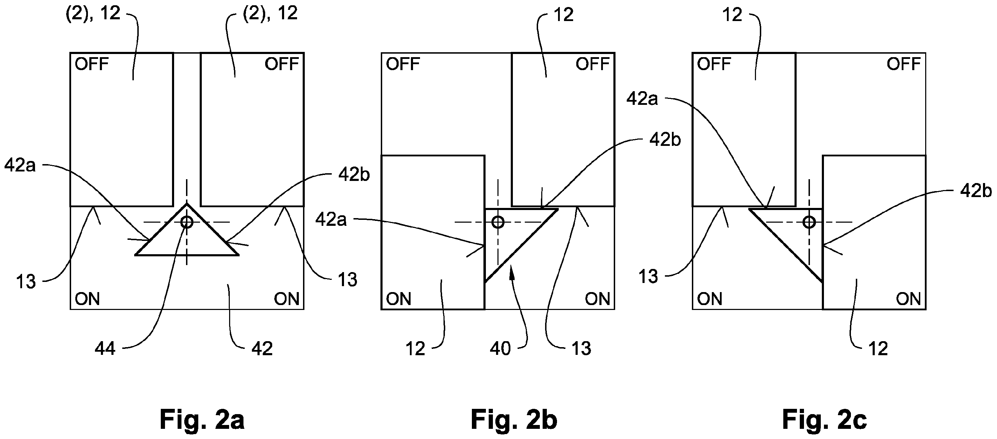

In den **Fig. 2a, 2b, 2c** ist schematisch die Wirkungsweise einer erfindungsgemäßen Fernantriebs-Anordnung mit zwei nebeneinander angeordneten Fernantrieben 2 und mit einem Verriegelungsmechanismus 40 dargestellt. Der Verriegelungsmechanismus 40 weist zwischen den Schlitten 12 der Fernantriebe 2 ein Verriegelungselement 42 auf, welches als rechtwinkliges, gleichschenkliges Winkelprofil 42, beispielsweise als Dreikant-Stababschnitt, ausgeführt und drehbar um eine Verriegelungsdrehachse 44 gelagert ist.

Ausgehend von der AUS-Stellung (OFF) der beiden Schlitten 12 in **Fig. 2a** stößt eine Frontfläche 13 eines der Schlitten 12 bei der Bewegung in die EIN-Stellung (ON) auf eine Seitenfläche 42a des Verriegelungselements 42. Dadurch dreht sich das Verriegelungselement 42 und blockiert mit seiner anderen Seitenfläche 42b eine Abwärtsbewegung (Einschaltbewegung) des anderen Schlittens 12 (**Fig. 2b, 2c**).

## Patentansprüche

1. Fernantriebs-Anordnung mit einem ersten und einem zweiten elektrischen Fernantrieb (2), wobei die Fernantriebe (2) auf einer Hutschiene (6) nebeneinander angeordnet sind und jeweils zur Betätigung einer an der Hutschiene (6) getrennt seitlich neben dem Fernantrieb mit einem Schaltknauf versehenen montierten Schalteinrichtung (4) einer elektrischen Anlage ausgelegt sind, wobei die Fernantriebe (2) jeweils umfassen
ein für eine normgemäße Hutschienenmontage ausgeführtes Trägerelement (8) mit zwei unabhängig voneinander ansteuerbaren Aktuatoren (10a, 10b), die als Elektromagnete (10a, 10b) ausgeführt gegenüberliegend wechselweise auf einen verschiebbar gelagerten Schlitten (12) des jeweiligen Fernantriebs (2) einwirken, welcher eine Durchführung (14) zur Aufnahme eines ersten Hebelarms (16a) eines Kipphebels (18) des jeweiligen Fernantriebs (2) aufweist und wobei an einem zweiten Hebelarm (16b) des Kipphebels (18) parallel zu der Längsausdehnung der Hutschiene (6) eine Mitnehmerschiene (20) des jeweiligen Fernantriebs (2) angebracht ist, in die seitlich des zweiten Hebelarms (16b) ein Schaltknauf (22) der neben dem elektrischen Fernantrieb angeordneten der Schalteinrichtung (4) eingreift, wobei der Kipphebel (18) um eine Kipphebel-Drehachse (24) schwenkbar ist, die parallel zu der Längsausdehnung der Hutschiene (6) und durch einen Drehpunkt des Schaltknaufs (22) verläuft, wobei die Fernantriebs-Anordnung einen Verriegelungsmechanismus (40), der durch Verriegelung eines der beiden Schlitten (12) durch den jeweils anderen Schlitten (12) bei dessen Bewegung aus einer AUS-Stellung in eine EIN-Stellung eine gleichzeitige Ingangsetzung beider Fernantriebe (2) verhindert, umfasst.

2. Fernantriebs-Anordnung nach Anspruch 1, wobei der Verriegelungsmechanismus (40) ein Verriegelungselement (42) in Form eines rechtwinkligen Winkelprofils (42) aufweist, welches um eine Verriegelungs-Drehachse (44), die senkrecht zur Ebene der Hutschiene (6) steht, drehbar so angeordnet ist, dass bei Verschieben eines der Schlitten (12) aus der AUS-Stellung in die EIN-Stellung eine Frontfläche (13) des Schlittens (12) gegen eine der Seitenflächen (42a) des Winkelprofils (42) stößt und das Winkelprofil (42) so weit dreht, dass durch Anlegen der anderen Seitenfläche (42b) des Winkelprofils (42) gegen eine Frontfläche (13) des anderen in der AUS-Stellung befindlichen Schlittens (12) eine Bewegung des anderen Schlittens (12) in die EIN-Stellung blockiert wird.

3. Fernantriebs-Anordnung nach Anspruch 1 oder 2, wobei die Mitnehmerschiene (20) als U-Profil ausgebildet ist.

4. Fernantriebs-Anordnung nach einem der Ansprüche 1 bis 3, wobei die Mitnehmerschiene (20) zur Anpassung an die Bewegung des Schaltknaufs (22) radial verstellbar angebracht ist.

5. Fernantriebs-Anordnung nach einem der Ansprüche 1 bis 4, wobei die Mitnehmerschiene (20) in ihrer Längsrichtung eine solche Ausdehnung aufweist, dass die Betätigung mehrerer auf der Hutschiene (6) nebeneinander montierter Schalteinrichtungen (4) möglich ist.

6. Fernantriebs-Anordnung nach einem der Ansprüche 1 bis 5, wobei das Trägerelement (8) einen lösbaren Hutschienen-Clip (7) zur Hutschienenmontage aufweist.

7. Fernantriebs-Anordnung nach Anspruch 2, wobei der Verriegelungsmechanismus eine Ausführung als eigenständige bauliche Einheit zur Montage an die Hutschiene (6) bildet, bestehend aus einem Rahmenteil zur Montage an der Hutschiene (6), an dem das Verriegelungselement (42) mit Verriegelungs-Drehachse (44) befestigt ist.

## Claims

1. A remote drive arrangement having a first and a second electric remote drive (2), the remote drives (2) being mounted adjacent to each other on a top hat rail (6) and each being configured for actuating a switching device (4) of the electric installation mounted on the top hat rail (6) separated laterally beside the remote drive having a shift lever, the remote drives (2) each comprising
a support element (8) configured for a standard top-hat-rail mounting and having two actuators (10a, 10b) which can be controlled individually and alternatingly act on a displaceably mounted slider (12) of the respective remote drive (2) as opposing electromagnets (10a, 10b), the slider (12) having a passage (14) for receiving a first lever arm (16a) of a rocker lever (18) of the respective remote drive (2), and a carrier rail (20) being mounted parallel to the long side of the top hat rail (6) on a second lever arm (16b) of the rocker lever (18), a shift lever (22) of the switching device (4) disposed next to the remote drive engaging into the carrier rail (20) to the side of the second lever arm (16b), the rocker lever (18) being pivotable about a rocker-lever rotational axis (24) which extends parallel to the long side of the top hat rail (6) and passes through a rotational point of the shift lever (22), the remote drive arrangement comprising a locking mechanism (40) which prevents a simultaneous start-up of both remote drives (2) by locking one of the two sliders (12) via the remaining slider (12) during its movement from an OFF position to an ON position.

2. The remote drive assembly according to claim 1,
wherein the locking mechanism (40) comprises a locking element (42) in the form of a rectangular angle profile (42) rotatable about a locking rotational axis (44), which is rectangular to the plane of the top hat rail (6), so as to be disposed such that, when displacing one of the sliders (12) from the OFF position to the ON position, a front surface (13) of the slider (12) bumps against one of the lateral surfaces (42a) of the angle profile (42) and the angle profile (42) rotates so far that by the other lateral surface (42b) of the angle profile (42) abutting against a front surface (13) of the other slider (12) in the OFF position, the other slider (12) is blocked from moving into the ON position.

3. The remote drive assembly according to claim 1 or 2,
wherein the carrier rail (20) is U-shaped.

4. The remote drive assembly according to claim 1 to 3,
wherein the carrier rail (20) is mounted in a radially displaceable manner for adjustment to the movement of the shift lever (22).

5. The remote drive assembly according to any one of the claims 1 to 4,
wherein the carrier rail (20) has such a length that actuating several adjacently mounted switching devices (4) on the top hat rail (6) is possible.

6. The remote drive assembly according to any one of the claims 1 to 5,
wherein the support element (8) comprises a detachable top-hat-rail clip (7) for mounting the top hat rail.

7. The remote drive assembly according to claim 2,
wherein the locking mechanism forms an embodiment as an independent structural unit for being mounted on the top hat rail (6), the locking mechanism consisting of a frame part for being mounted on the top hat rail (6) to which the locking element (42) having the locking rotational axis (44) is fastened.

## Revendications

1. Arrangement de télécommande ayant une première et une seconde télécommande (2), les télécommandes (2) étant montées l'une à côté de l'autre sur un profilé chapeau (6) et chacune étant configurée pour actionner un dispositif de commutation (4) de l'installation électrique monté sur le profilé chapeau (6) séparé latéralement à côté de la télécommande ayant un levier de changement de vitesse, les télécommandes (2) comprenant chacune
un élément de support (8) configuré pour un montage standard sur le profilé chapeau (6) et ayant deux actionneurs (10a, 10b) pouvant être commandés individuellement et agissant alternativement sur un coulisseau (12) monté de manière mobile de la télécommande (2) respective en tant qu'électroaimants (10a, 10b) opposés, le coulisseau (12) ayant un passage (14) pour recevoir un premier bras de levier (16a) d'un levier à bascule (18) de la télécommande respective (2), et un rail porteur (20) de la télécommande (2) étant monté parallèlement au côté long du profilé chapeau (6) sur un second bras de levier (16b) du levier à bascule (18), un levier (22) de changement de vitesse du dispositif de commutation (4) disposé à côté de la télécommande s'engageant dans le rail porteur (20) sur le côté du second bras de levier (16b), le levier à bascule (18) pouvant pivoter autour d'un axe de rotation (24) du levier à bascule qui s'étend parallèlement au côté long du profilé chapeau (6) et passant par un point de rotation du levier (22) de changement de vitesse, l'arrangement de télécommande comprenant un mécanisme de verrouillage (40) qui empêche le démarrage simultané des deux télécommandes (2) en bloquant l'un des deux coulisseaux (12) par l'intermédiaire de l'autre coulisseau (12) pendant son mouvement d'une position éteinte à une position allumée.

2. Arrangement de télécommande selon la revendication 1,
dans lequel le mécanisme de verrouillage (40) comprend un élément de verrouillage (42) sous la forme d'un profil d'angle (42) rectangulaire rotatif autour d'un axe rotatif de verrouillage (44), qui est rectangulaire par rapport au plan du profilé chapeau (6), de manière à être disposé de telle sorte que, lors du déplacement d'un des coulisseaux (12) de la position éteinte à la position allumée, une surface frontale (13) du coulisseau (12) bute contre l'une des surfaces latérales (42a) du profilé d'angle (42) et le profilé d'angle (42) tourne de telle sorte qu'un mouvement de l'autre coulisseau (12) en position allumée est bloqué en l'autre surface latérale (42b) du profilé d'angle (42) butant contre une surface frontale (13) de l'autre coulisseau (12) en position éteinte.

3. Arrangement de télécommande selon la revendication 1 ou la revendication 2,
dans lequel le rail porteur (20) est en forme de U.

4. Arrangement de télécommande selon la revendication 1 à 3,
dans lequel le rail porteur (20) est monté de manière à pouvoir être déplacé radialement pour s'adapter au mouvement du levier (22) de changement de vitesse.

5. Arrangement de télécommande selon l'une quelconque des revendications 1 à 4,
dans lequel le rail porteur (20) a une longueur telle qu'il est possible d'actionner plusieurs dispositifs de commutation (4) montés de manière adjacente sur le profilé chapeau (6).

6. Arrangement de télécommande selon l'une quelconque des revendications 1 à 5,
dans lequel l'élément de support (8) comprend une pince amovible (7) du profilé chapeau pour le montage du profilé chapeau.

7. Arrangement de télécommande selon la revendication 2,
dans lequel le mécanisme de verrouillage forme une unité structurelle indépendante destinée à être montée sur le profilé chapeau (6), le mécanisme de verrouillage consistant en une partie de cadre destinée à être montée sur le profilé chapeau (6) à laquelle l'élément de verrouillage (42) ayant l'axe rotatif de verrouillage (44) est fixé.
